# EUROPÄISCHE PATENTANMELDUNG

(11) **EP 1 172 675 A2**
(43) Veröffentlichungstag der Anmeldung: **16.01.2002**
(21) Anmeldenummer: 01116821.8
(22) Anmeldetag: 10.07.2001
(51) Int. Cl.: G02B 6/46, H02G 1/06

(54) **Kabelverlegungsmaschine und Verfahren zum Verlegen von Kabeln**

(30) Priorität: 11.07.2000 DE 10033517
(71) Anmelder: Schuster, Reinhard, 82389 Böbing (DE)
(72) Erfinder: Schuster, Reinhard, 82389 Böbing (DE)
(74) Vertreter: Flosdorff, Jürgen, Dr.

(57) **Zusammenfassung**

Das unterirdische Verlegen von Glasfaserleitungen oder ähnlicher Kabel oder der oberirdische Aufbau eines neuen Leitungssystems verursacht bisher sehr hohe Kosten. Um diese zu reduzieren, ist vorgesehen, die Glasfaserleitungen mittels einer Kabelverlegemaschine in der Weise an einem von Masten gehaltenen Seil zu befestigen, daß die Glasfaserleitung beim Fahren der Kabelverlegemaschine auf dem Seil dicht neben dem Seil angeordnet wird, wobei wenigstens ein Laschband fortlaufend wendelförmig um das Seil und die Glasfaserleitung gewickelt wird.

## Beschreibung

Die Erfindung betrifft eine Kabelverlegemaschine und ein Verfahren, mit dem insbesondere Glasfaserleitungen verlegt werden. Obwohl grundsätzlich auch andere Kabel bzw. Leitungen mit der Maschine verlegbar sind, wird die Erfindung anhand dieses bevorzugten Anwendungszwecks beschrieben.

In der Telekommunikation wird die Glasfaserleitung wegen ihrer im Vergleich zu herkömmlichen Kupferleitungen wesentlich besseren technischen Eigenschaften in immer stärkerem Maße eingesetzt. Ein unterirdisches Verlegen oder ein oberirdischer Aufbau von Glasfaserleitungssystemen ist aber mit sehr hohen Kosten verbunden.

Es ist bereits vorgeschlagen worden, ein bereits bestehendes elektrisches Leitungsnetz zum Verlegen von Glasfaserleitungen zu nutzen, indem an den Stahlgittermasten dieses Netzes die an den Spitzen der Masten befestigten Blitzschutzseile gegen solche Blitzschutzseile ausgetauscht werden, die im Zentrum eine integrierte Glasfaserleitung haben. Auch diese Vorgehensweise zum Verlegen von Glasfaserleitungen ist mit enormen Kosten verbunden.

Der vorliegenden Erfindung liegt die Aufgabe zugrunde, ein Verfahren und eine Maschine anzugeben, nach dem bzw. mit der allgemein Kabel und Leitungen, insbesondere Glasfaserleitungen, mit einem erheblich geringeren Kostenaufwand verlegt werden können.

Diese Aufgabe wird erfindungsgemäß durch die Merkmale der Patentansprüche 1 und 4 gelöst.

Vorteilhafte Ausgestaltungen der Erfindung sind in den abhängigen Ansprüchen gekennzeichnet.

Das erfindungsgemäße Verfahren sieht vor, daß das Kabel, insbesondere die Glasfaserleitung, an einem bereits existierenden, von Masten gehaltenen Seil befestigt wird, indem die Glasfaserleitung dicht neben dem Seil angeordnet und wenigstens ein Band fortlaufend wendelförmig um das Seil und die Glasfaserleitung gewickelt wird. Dabei handelt es sich bei dem Band vorzugsweise um ein Klebeband. Es kann auch vorgesehen sein, daß zwei oder mehr sogenannte Laschbänder um das Seil und die Glasfaserleitung gewikelt werden, wobei grundsätzlich auch mehrere Glasfaserleitungen auf diese Weise an einem Seil befestigbar sind.

Auf diese Weise läßt sich ein bereits bestehendes, von Masten gehaltenes elektrisches Leitungsnetz auf sehr viel kostengünstigere Weise zum Verlegen von Glasfaserleitungen nutzen, indem vorzugsweise das Blitzschutzseil von Stahlgittermasten zur fortlaufenden Befestigungen der Glasfaserleitungen genutzt wird.

Das Verfahren wird durch eine Kabelverlegemaschine automatisch ausgeführt, die erfindungsgemäß Laufrollen, auf denen sie auf dem Seil verfahrbar ist, einen Antriebsmotor für die Laufrollen, eine Halterung für eine Kabeltrommel mit dem zu verlegenden Kabel (Glasfaserleitung), eine Kabelführung, die zweckmäßigerweise einstellbar ist und das von der Kabeltrommel abgezogene

Kabel dicht neben das Seil führt, und einen das Seil umgreifenden, mit einem Drehantrieb versehenen Spinner aufweist, der wenigstens eine Laschbandspulenaufnahme und eine Umlenkeinrichtung für das von der Spule abgegebene Laschband aufweist, wobei der Spinner in Fahrtrichtung der Maschine gesehen hinter der Kabelführung angeordnet ist, so daß das Laschband spiralförmig um das Seil und das Kabel gewickelt wird. Das Kabelende ist dabei auf geeignete Weise gehalten bzw. befestigt, so daß beim Fahren auf dem Seil von der Kabeltrommel stetig das Kabel (die Glasfaserleitung) abgezogen wird, die durch die Kabelführung parallel zu dem Seil angeordnet wird. Dicht hinter der Kabelführung wird das Kabel durch das Laschband in Anlage an dem Seil befestigt, so daß es dauerhaft sicher gehalten ist.

Die Kabelverlegemaschine wird dabei zweckmäßigerweise vom Boden aus über Funk gesteuert, wozu sie eine geeignete Empfangs- und Steuereinrichtung hat.

Zweckmäßigerweise liegt die Verlegemaschine mit zwei Laufrädern auf dem Seil auf, die mit einer Rollenkette verbunden sind, die von einem Hydraulikmotor angetrieben wird. Zwischen den Laufrollen greift von unten eine Gegenrolle am Seil an, die durch eine Federeinrichtung gegen das Seil gepreßt wird, deren Kraft durch eine Spindel einstellbar ist.

Damit die mit den Laufrollen auf dem Seil sitzende Verlegemaschine sicher auf dem Seil gehalten ist, muß ihr Schwerpunkt unterhalb des Seiles liegen. Hierzu wird vorgeschlagen, daß die Halterung, die die drehbare Kabeltrommel aufnimmt, unter der in Maschinenlaufrichtung vorderen Laufrolle angeordnet ist, und daß sich unter der hinteren Laufrolle ein Verbrennungsmotor befindet, der eine Hydraulikpumpe antreibt, um den Hydraulikmotor der Laufrollen und des Spinners zu versorgen.

Das große Gewicht der Kabeltrommel und des Verbrennungsmotors sorgen dafür, daß die Kabelverlegemaschine stets in vertikaler Ausrichtung auf dem Seil sitzt oder beilspielsweise bei Auslenkung durch eine Windböe- umgehend wieder in die vertikale Lage zurückkehrt.

Der Spinner weist einen Drehteller auf, der -wie oben erwähnt- zweckmäßigerweise von einem Hydraulikmotor drehbar ist.

Der Drehteller hat eine mittige, bevorzugt kreisrunde Aussparung und einen weggeschnittenen Umfangsabschnitt, der es ermöglicht, daß das Seil (relativ betrachtet) mittig in den Drehteller eintritt bzw. diesen mittig durchgreift. In dieser Position liegen die Laufrollen auf dem Seil auf, deren Laufflächen demnach mit der mittigen Aussparung des Drehtellers fluchten.

An dem Drehteller sind mittels einer geeigneten Halterung bevorzugt zwei Laschbandspulenaufnahmen befestigt, auf denen die frei drehbaren Laschbandspulen sitzen, für die jeweils eine Bremse zum Einstellen der Laschbandabzugkraft vorgesehen ist. An der Halterung sind außerdem zwei Umlenkrollen für die Laschbänder befestigt.

Es liegt im Rahmen der Erfindung, daß nur eine Laschbandspulenaufnahme vorgesehen sein kann, während andererseits grundsätzlich auch eine größere Anzahl in Betracht kommt.

Die erfindungsgemäße Kabelverlegemaschine befestigt vollautomatisch Glasfaserleitungen (oder andere Leitungen) an einem Seil, vorzugsweise einem Blitzschutzseil, das zwischen zwei Stahlmasten gespannt ist. Die Maschine hat einen verhältnismäßig einfachen Aufbau und ist leistungsstark, so daß das Verlegen von Glasfaserleitungen nach dem erfindungsgemäßen Verfahren und mit der erfindungsgemäßen Kabelverlegemaschine mit erheblich weniger Kosten als beim Stand der Technik verbunden ist.

Weitere Einzelheiten der Erfindung ergeben sich aus der nachfolgenden Beschreibung einer Ausführungsform der erfindungsgemäßen Kabelverlegemaschine. Dabei zeigen:

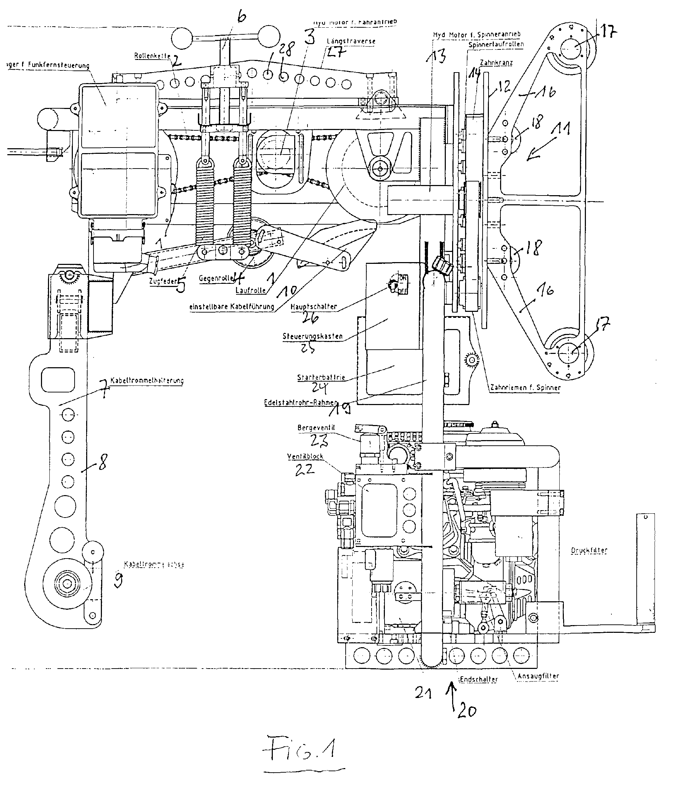

- Fig. 1: eine Seitenansicht der Maschine;
- Fig. 2: eine Ansicht der Maschine gemäß Fig. 1 von rechts und

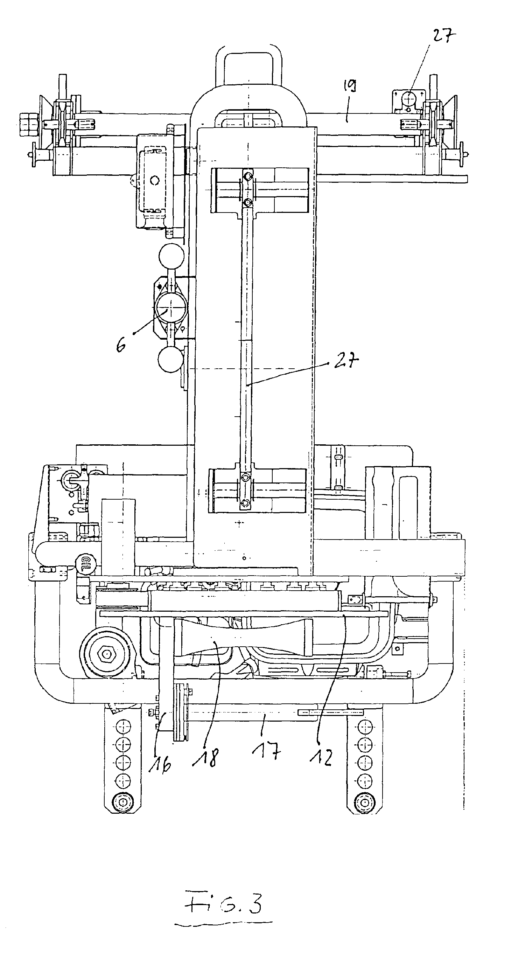

- Fig. 3: eine Aufsicht auf die Maschine.

Die Kabelverlegemaschine liegt mit zwei Laufrollen 1 auf einem nicht dargestellten Seil auf. Die Laufrollen 1 sind durch eine Rollenkette 2 miteinander verbunden, die von einem Hydraulikmotor 3 antreibbar ist. Von unten liegt eine Gegenrolle 4 an dem Seil an, die von zwei Zugfedern 5 fest gegen das Seil gezogen wird, wobei der Federsitz durch eine Spindel 6 verstellbar ist.

Unter der in Laufrichtung vorderen Laufrolle 1 befindet sich eine Kabeltrommelhalterung 7, die mit zwei voneinander beabstandeten, nach unten ragenden Armen 8 eine Kabeltrommelachse 9 hält. Auf diese Kabeltrommelachse 9 ist eine Trommel mit der zu verlegenden Glasfaserleitung aufnehmbar.

Die von der Kabeltrommel abgegebene Glasfaserleitung wird über eine unterhalb des Seils angeordnete, einstellbare Kabelführung 10 so geführt, daß das abgegebene Kabel dicht neben das Seil oder in Anlage an das Seil gebracht wird.

Am rückwärtigen Ende der Kabelverlegemaschine befindet sich eine Spinneranordnung 11, die einen Drehteller 12 enthält, der von einem Hydraulikmotor 13 über einen Zahnkranz 14 drehbar ist.

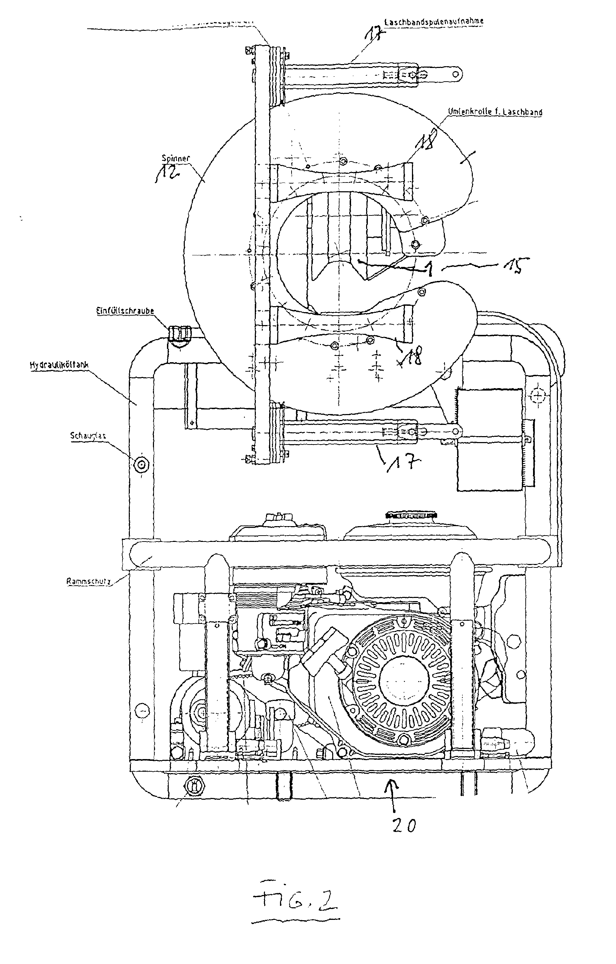

Wie Fig. 2 zeigt, enthält der Drehteller 12 eine mittige kreisrunde Aussparung, wobei außerdem ein Umfangsabschnitt 15 des Drehtellers 12 weggeschnitten ist, so daß durch diesen weggeschnittenen Umfangsabschnitt 15 hindurch das Seil (relativ betrachtet), die mittige Aussparung des Drehtellers 12 durchgreifen kann. In dieser Anordnung werden die Laufrollen 1 -wie Fig. 2 zeigt- auf das (nicht dargestellte) Seil aufgesetzt.

An zwei Armen 16, die an dem Drehteller 12 befestigt sind, sind zwei Laschspulenaufnahmen 17 angebracht. Auf diese Spulenaufnahmen 17 werden zwei Spulen aufgesetzt, deren Laschband über die jeweils zugeordnete Umlenkrolle 18 geführt wird, bevor die Laschbänder durch Rotation des Spinners während der Fahrt der Maschine um das Seil und die anliegende Glasfaserleitung gewikelt wird.

Unterhalb der hinteren Laufrolle 1 hängt an einem Edelstahlrahmen 19 ein insgesamt mit dem Bezugszeichen 20 bezeichneter Verbrennungsmotor mit seinen Bestandteilen, die im einzelnen für die vorliegende Erfindung uninteressant sind. Der Verbrennungsmotor treibt eine verstellbare Hydraulikpumpe 21 an, über der sich ein Ventilblock 22 und ein Bergeventil 23 befinden.

Darüber sind an dem Edelstahlrohr-Rahmen eine Starterbatterie 24, ein Steuerungskasten 25 und ein Hauptschalter 26 vorgesehen.

Oberhalb der Laufräder 1 ist an dem Rahmen der Maschine eine Längstraverse 27 befestigt, die eine Reihe voneinander beabstandeter Bohrungen 28 enthält, in die beispielsweise ein Kranhaken eingreifen kann, um die Maschine anzuheben.

## Patentansprüche

1. Verfahren zum Verlegen einer Glasfaserleitung,
**dadurch gekennzeichnet,**
**daß** die Glasfaserleitung an einem von Masten gehaltenen Seil befestigt wird, indem die Glasfaserleitung dicht neben dem Seil angeordnet und wenigstens ein Band fortlaufend wendelförmig um das Seil und die Glasfaserleitung gewickelt wird.

2. Verfahren nach Anspruch 1,
**dadurch gekennzeichnet, daß** das wenigstens eine Band ein Klebeband ist.

3. Kabelverlegemaschine,
**gekennzeichnet durch** Laufrollen (1), auf denen die Kabelverlegemaschine auf einem von Masten gehaltenen Seil verfahrbar ist,
einen Antriebsmotor (3) für die Laufrollen (1),
eine Halterung (7) für eine Kabeltrommel mit dem zu verlegenden Kabel,
eine Kabelführung (10), die das von der Kabeltrommel abgegebene Kabel dicht neben das Seil führt,
und einen das Seil umgreifenden, mit einem Drehantrieb (13) versehenen Spinner (11), der wenigstens eine Bandspulenaufnahme (17) und eine Umlenkeinrichtung (18) für das von der Spule abgegebene Band aufweist, wobei der Spinner (11) in Maschinenlaufrichtung gesehen hinter der Kabelführung (10) angeordnet ist, so daß das Band spiralförmig um das Seil und das Kabel gewickelt wird.

4. Kabelverlegemaschine nach Anspruch 3,
**dadurch gekennzeichnet, daß** zwei mit einer Rollenkette (2) verbundene Laufrollen (1) vorgesehen sind und daß die Rollenkette (2) von einem Hydraulikmotor (3) antreibbar ist.

5. Kabelverlegemaschine nach Anspruch 3 oder 4,
ferner **gekennzeichnet durch** wenigstens eine mit einer Zugfedereinrichtung (5) versehene Gegenrolle (4), wobei die Federkraft **durch** eine Spindel (6) einstellbar ist.

6. Kabelverlegemaschine nach einem der Ansprüche 3 bis 5,
**dadurch gekennzeichnet, daß** die Kabeltrommelhalterung (7) unter der in Maschinenlaufrichtung vorderen Laufrolle (1) angeordnet ist.

7. Kabelverlegemaschine nach einem der Ansprüche 3 bis 6,
**dadurch gekennzeichnet, daß** ein Verbrennungsmotor (20) unterhalb der hinteren Laufrolle (1) angeordnet ist, der eine Hydraulikpumpe (21) antreibt.

8. Kabelverlegemaschine nach einem der Ansprüche 3 bis 7,
**dadurch gekennzeichnet, daß** der Spinner (11) einen Drehteller (12) aufweist, der von einem Hydraulikmotor (13) drehbar ist.

9. Kabelverlegemaschine nach Anspruch 8,
**dadurch gekennzeichnet, daß** der Drehteller (12) eine mittige Aussparung und einen weggeschnittenen Umfangsabschnitt (15) aufweist.

10. Kabelverlegemaschine nach Anspruch 8 oder 9,
**dadurch gekennzeichnet, daß** an dem Drehteller (12) zwei einander gegenüberliegende Laschbandspulenaufnahmen (17) mit zugehörigen Umlenkrollen (18) für die Laschbänder befestigt sind.
